# EUROPÄISCHE PATENTSCHRIFT

(11) **EP 3 370 961 B1**
(45) Veröffentlichungstag und Bekanntmachung des Hinweises auf die Patenterteilung: **04.09.2019**
(21) Anmeldenummer: 16788649.8
(22) Anmeldetag: 18.10.2016
(51) Int. Cl.: B32B 41/00, B32B 37/06, B32B 15/08, B32B 37/20, B32B 7/12, B32B 15/085, B32B 15/088, B32B 15/18, B32B 15/20, B32B 27/06, B32B 27/18, B32B 27/32, B32B 27/08, B32B 27/34

(54) **VERFAHREN UND ANLAGE ZUM HERSTELLEN VON VERBUNDBÄNDERN ODER -BLECHEN**
METHOD AND SYSTEM FOR PRODUCING COMPOSITE STRIPS OR COMPOSITE SHEETS
PROCÉDÉ ET INSTALLATION DE FABRICATION DE BANDES OU DE TÔLES COMPOSITES

(30) Priorität: 05.11.2015 DE 102015118970
(43) Veröffentlichungstag der Anmeldung: 12.09.2018
(73) Patentinhaber: ThyssenKrupp Steel Europe AG, 47166 Duisburg (DE); BWG Bergwerk- Und Walzwerk-Maschinenbau GmbH, 47051 Duisburg (DE)
(72) Erfinder: NOÉ, Andreas, 47647 Kerken (DE); HEERMANN, Klemens, 46284 Dorsten (DE); VON DER OHE, Thomas, 51379 Leverkusen (DE); JANSSEN, Stella, 40476 Düsseldorf (DE); KLARE, Andreas, 44532 Lünen (DE); KOCH, Klaus-Peter, 58332 Schwelm (DE); RASPUDIC, Gerold, 57223 Kreuztal (DE); RUDACK, Markus, 52076 Aachen (DE); SCHNEIDER, Josef, 57482 Wenden (DE)
(74) Vertreter: Andrejewski - Honke Patent- und Rechtsanwälte Partnerschaft mbB
(86) Internationale Anmeldenummer: PCT/EP2016/074945
(87) Internationale Veröffentlichungsnummer: WO 2017/076633

(56) Entgegenhaltungen:
- EP-A2- 1 070 557
- DE-A1-102013 110 282
- US-A- 5 687 595

## Beschreibung

Die Erfindung betrifft ein Verfahren zum Herstellen von Verbundbändern oder -blechen, bestehend aus zumindest einer ersten (z. B. unteren) Deckschicht aus Metall, einer zweiten (z. B. oberen) Deckschicht aus Metall und zumindest einer zwischen den Deckschichten angeordneten und mit diesen stoffschlüssig verbundenen Kernschicht aus Kunststoff, wobei ein erstes Metallband für die erste Deckschicht, ein zweites Metallband für die zweite Deckschicht und zumindest eine Kunststoffbahn (z. B. Kunststofffolie) für die Kernschicht zusammengeführt und unter Anwendung von Druck und/oder Wärme (kontinuierlich) miteinander stoffschlüssig verbunden werden, wobei das erste Metallband und das zweite Metallband vor dem Zusammenführen und/oder während des Zusammenführens erwärmt werden.

Solche Metall-Kunststoff-Verbundbleche bzw. Sandwichbleche werden z. B. im Fahrzeugbau eingesetzt. Sie sollen zum einen herkömmliche Stahlbleche und zum anderen auch Aluminiumbleche ersetzen, da sie einerseits leichter als Stahlbleche, andererseits jedoch kostengünstiger als Aluminiumbleche sind. Die Deckbleche weisen dabei z. B. eine Dicke im Bereich von 0,1 mm bis 1 mm auf und die Kernschicht aus Kunststoff weist z. B. eine Dicke von 0,05 mm bis 3 mm auf. Solche Verbundbleche finden im Automobilbau vielfältigen Einsatz, z. B. als Karosseriebleche für die Außenhaut, aber auch als Struktur- und Verstärkungsteile. Die Sandwichbleche zeichnen sich durch eine hohe Biege- und Beulsteifigkeit aus und sie verfügen außerdem über gute Umformeigenschaften, so dass sie hervorragend zu entsprechenden Bauteilen verarbeitbar sind. Neben der Gewichts- und Kostenreduzierung lassen sich mit solchen Sandwichblechen auch die akustischen Eigenschaften und die Wärmedämmung verbessern.

Im Zuge der Herstellung werden für die Deckbleche zunächst z. B. kaltgewalzte Stahlbleche zur Verfügung gestellt, die in der Regel geglüht, dressiert und verzinkt werden. Die auf diese Weise hergestellten Deckbleche werden dann als erste obere Deckschicht und als zweite untere Deckschicht unter Zwischenschaltung der Kunststoffbahn zusammengeführt und unter Druck und/oder Wärme miteinander verbunden, indem die Kunststoff-Kernschicht sowohl mit der oberen Deckschicht als auch mit der unteren Deckschicht stoffschlüssig verbunden wird.

Ein Verfahren zum Herstellen von Verbundbändern oder -blechen ist z. B. aus der DE 10 2013 110 282 A1 bekannt. Dabei sollen die beiden Deckbleche aus einem Metallblech gebildet sein, dessen Oberflächen zueinander unterschiedliche Rauheiten aufweisen. Die Kunststoffschicht soll aus Polyamid, Polyethylen oder einer Mischung aus Polyamid und Polyethylen hergestellt sein. Das dressierte Metallband wird vor dem einseitigen Aufbringen der Kunststoffschicht zunächst in einer oder mehreren Bearbeitungsstationen vorbehandelt. So wird das Band z. B. in einer Bearbeitungsstation alkalisch entfettet und/oder gereinigt. In einer nachfolgenden Bearbeitungsstation wird die Bandoberfläche in einem oder mehreren chemischen Vorbehandlungsbädern passiviert und somit für die Beschichtung vorbereitet. Außerdem kann eine Bearbeitungsstation zum einseitigen Auftragen eines Haftvermittlers oder Klebstoffs vorgesehen sein. Nach dieser Vorbehandlung wird auf die ggf. mit Haftvermittler oder Kleber versehene Seite des Bandes eine Kunststoffschicht aufgebracht. Sie kann z. B. in Form einer vorgefertigten Kunststofffolie auf das Band aufkaschiert werden, z. B. mit einer Laminiervorrichtung, die Presswalzen aufweist, wobei zumindest eine der Walzen der Laminiervorrichtung beheizt sein kann. Nach dem Aufbringen der Kunststoffschicht durchläuft das einseitig beschichtete Band eine Kühlungs- und/oder Trocknungseinrichtung. Im Anschluss daran wird das Band zu einem Coil aufgewickelt und zwischengelagert oder unmittelbar zu einer Vorrichtung zum Aufbringen eines Deckbleches oder eines ebenfalls einseitig mit einer Kunststoffschicht beschichteten Deckbleches weitertransportiert. In dieser nachgeschalteten Vorrichtung werden dann z. B. zwei bandförmige Halbzeuge zusammengeführt, die jeweils aus einem Deckblech und einer Kunststoffbeschichtung bestehen, wobei die beiden Halbzeuge von der jeweiligen Abwickelhaspel abgewickelt und einem Walzenpaar in der Weise zugeführt werden, dass die beiden Kunststoffschichten der Halbzeuge einander zugewandt sind und aneinander anliegen. Unmittelbar bevor die Halbzeuge in den von den Walzen definierten Walzenspalt eingeführt werden, werden die Kunststoffschichten beider Halbzeuge durch von der Kunststoffoberflächenseite her einwirkende Mittel aktiviert (vgl. DE 10 2013 110 282 A1).

Ein ähnliches Verfahren zur Herstellung von Verbundblechen wird in der DE 10 2013 013 495 A1 beschrieben. Dabei erfolgt die Aktivierung der Kunststoffschicht der Halbzeuge unmittelbar von der mit Kunststoff beschichteten Seite des Halbzeugs her.

In der DE 10 2011 015 071 A1 und der DE 10 2012 106 206 A1 werden entsprechende Sandwichbleche beschrieben, bei denen die Kunststoffschicht aus faserverstärktem Kunststoff besteht.

Alternativ beschreibt die EP 2 193 021 B1 ein Sandwichblech, bei dem die aus Kunststoff hergestellte Kernschicht als Schaumschicht ausgebildet ist, die ein Polyamid-Polyethylen-Blend aufweist.

Insgesamt besteht das Bedürfnis, Verbundbleche der eingangs beschriebenen Art in wirtschaftlicher Weise mit hoher Qualität herzustellen.

So besteht grundsätzlich die Möglichkeit, dass sich bei der Herstellung des Sandwichbandes unerwünschte Querkrümmungen ausbilden, die auch als Crossbow bezeichnet werden. - Hier setzt die Erfindung ein.

Im Übrigen ist aus der DE 689 26 006 T2 die Herstellung eines Verbundbleches bekannt, wobei zwischen zwei Aluminium- oder Eisenschichten eine thermoplastische Harzschicht in Form einer festen Schicht verwendet wird. Um eine hohe Oberflächenqualität zu erzielen, sollen an die Aluminium- oder Eisenschichten hohe Zugspannungen angelegt werden, wenn diese den heißen Presswalzen zugeführt werden.

Schließlich befasst sich die DE 101 24 836 A1 mit dem Eliminieren von Querkrümmungen in Metallbändern, und zwar mit Hilfe einer einstellbaren Korrekturrolle.

Der Erfindung liegt die Aufgabe zugrunde, ein Verfahren der eingangs beschriebenen Art derart weiterzubilden, dass sich Verbundbänder oder -bleche wirtschaftlich mit hoher Qualität und insbesondere querkrümmungsfrei herstellen lassen. Dazu soll auch eine Anlage geschaffen werden, welche eine wirtschaftliche Herstellung der Verbundbänder mit hoher Qualität und insbesondere querkrümmungsfrei ermöglicht.

Zur Lösung dieser Aufgabe lehrt die Erfindung bei einem gattungsgemäßen Verfahren der eingangs beschriebenen Art, dass nach dem Zusammenführen und Verbinden der Metallbänder eine Ist-Querkrümmung des Verbundbandes gemessen wird und dass die Temperierung des ersten Metallbandes und/oder des zweiten Metallbandes vor dem Zusammenführen und/oder während des Zusammenführens in Abhängigkeit von der Ist-Querkrümmung erfolgt bzw. eingestellt wird.

Die Erfindung geht dabei von der Erkenntnis aus, dass es bei der Herstellung von Verbundbändern zu unerwünschten Querkrümmungen kommen kann, wenn im Zuge des stoffschlüssigen Verbindens der Metallbänder unter Zwischenschaltung der Kunststoffbahn und folglich bei dem Laminierprozess die Temperaturen der Deckbänder bzw. Deckschichten nicht gleich sind. Denn beim Zusammenführen und Verbinden (z. B. in einem beheizten Kalander) wird die Temperatur im Sandwichband vergleichmäßigt. Sofern z. B. das untere Deckband vor dem Zusammenführen kälter als das obere Deckband ist, wird es sich beim Verbinden (z. B. im Kalander) und gegebenenfalls im Nachheizofen relativ zu dem oberen Deckband erwärmen. Dieses führt zu einer Längenausdehnung des unteren Deckbandes in Bandbreitenrichtung relativ zu dem oberen Deckband. Der Längenunterschied zwischen den beiden Deckbändern führt somit zu einer tonnenförmigen Querkrümmung. Erfindungsgemäß werden solche Querkrümmungen nun nicht - wie es bei Metallbändern häufig üblich ist - durch eine nachträgliche Krümmungskorrektur eliminiert, sondern erfindungsgemäß erfolgt bereits eine gezielte Temperierung der Metallbänder vor dem Zusammenführen und/oder während des Zusammenführens, um die Ausbildung von Querkrümmungen bereits von vornherein zu vermeiden. Dieses wird jedoch erfindungsgemäß nicht dadurch erreicht, dass die beiden Metallbänder in den Vorheizeinrichtungen stets auf exakt dieselbe Solltemperatur aufgeheizt werden. Denn die Bänder durchlaufen nach den Vorheizeinrichtungen bis zu der Zusammenführung, z. B. in einem Kalander, noch freie Strecken, die nicht zwingend dieselbe Länge aufweisen müssen und in denen nicht zwingend dieselben Bedingungen herrschen müssen. Im Übrigen kann die Umschlingung der Bänder in der Zusammenführvorrichtung, die z. B. als Kalander mit Walzen ausgebildet sein kann, unterschiedlich sein. Damit könnten bei einer einfachen Vorsteuerung der Bandtemperatur Querkrümmungen im Sandwichband verbleiben. Erfindungsgemäß werden die Metallbänder folglich nicht einfach nur auf identische Temperaturen vorgeheizt, sondern eventuell entstehende Querkrümmungen werden in einem vorgegebenen Abstand hinter der Zusammenführung messtechnisch erfasst und die Temperierung der Metallbänder erfolgt gezielt in Abhängigkeit von der gemessenen Querkrümmung. Das führt dazu, dass zur Eliminierung von Querkrümmungen gegebenenfalls auch gezielt unterschiedliche Temperaturen in den beiden Metallbändern eingestellt werden.

Besonders bevorzugt werden die Querkrümmungen in einem geschlossenen Regelkreis auf eine vorgegebene Soll-Querkrümmung geregelt, wobei die Soll-Querkrümmung bevorzugt den Wert Null (gegebenenfalls mit vorgegebenem Toleranzbereich) aufweist. Als Stellgröße eines solchen Regelkreises wird dann bevorzugt die Temperierung des ersten Metallbandes und/oder des zweiten Metallbandes vor dem Zusammenführen oder während des Zusammenführens verwendet. Das bedeutet, dass bei Abweichung der gemessenen Ist-Querkrümmung von der Soll-Querkrümmung ein Korrektursignal für die Stellgröße, d. h. die Temperierung erzeugt wird.

Zur Temperierung bzw. zur Veränderung der Temperierung und damit der Temperatur des jeweiligen Metallbandes vor dem Zusammenführen können ein oder mehrere Betriebsparameter der jeweiligen Vorheizeinrichtung eingestellt werden. Bei der Vorheizeinrichtung kann es sich z. B. um einen Ofen, vorzugsweise um einen Bandschwebeoben handeln, so dass dann zur Veränderung der Temperierung die Umlufttemperatur im Ofen und/oder die Umluftventilator-Drehzahl verwendet werden kann. Diese Parameter lassen sich schnell anpassen und eignen sich damit sehr gut zur Variierung der Temperierung bzw. zur Variierung der Bandtemperatur. Dabei wird übergeordnet gewährleistet, dass die Bandtemperaturen in einem Temperaturbereich liegen, der eine einwandfreie Haftung beider Deckbänder an der Kernschicht beim Zusammenführen und Verbinden, z. B. in einem Kalander, gewährleistet. In Abhängigkeit von den verwendeten Materialien können die Bandtemperaturen in einem Temperaturbereich von z. B. 190 °C bis 250 °C, z. B. 200 °C bis 240 °C, besonders bevorzugt 210 °C bis 230 °C liegen.

Alternativ zu einer Variierung der Bandtemperatur über die Vorheizeinrichtungen (z. B. Bandschwebeöfen) kann die Temperierung auch über die Zusammenführeinrichtung, z. B. eine temperierbare Walzeneinrichtung (z. B. einen Kalander) eingestellt werden. Denn die Metallbänder werden bevorzugt unter Zwischenschaltung der Kunststoffbahn zwischen Walzen einer Walzeneinrichtung, z. B. eines Kalanders, zusammengeführt. Zur Temperierung bzw. zur Veränderung der Temperierung und damit der Temperatur der Metallbänder kann dann die Temperierung einer oder beider Walzen variiert bzw. eingestellt werden. So ist es in der Praxis z. B. üblich, Kalanderwalzen innen mit einem geeigneten Medium, z. B. Thermoöl, aufzuheizen. Auf diese Weise kann die Stellgröße auch in diesem Bereich der Anlage variiert werden.

Im Vordergrund der Erfindung steht folglich eine Beeinflussung der Temperatur eines oder beider Metallbänder vor oder während des Zusammenführens der Metallbänder mit der Maßgabe, dass das hergestellte Sandwichband querkrümmungsfrei ist bzw. eine vorgegebene Querkrümmung (die gegebenenfalls Null sein kann) aufweist. In Abhängigkeit von einer gemessenen Ist-Querkrümmung werden folglich Maßnahmen ergriffen, um die Bandtemperatur des Bandes bzw. der Bänder zu variieren, wobei es nicht erforderlich ist, exakt vorgegebene Bandtemperaturen einzustellen oder gar die Temperaturen auf bestimmte Soll-Temperaturen zu regeln. Die Bandtemperaturen bilden folglich in dem beschriebenen Regelkreis nicht die Regelgröße und auch nicht den Sollwert, sondern die Stellgröße, denn durch Variation der Bandtemperatur wird der Ist-Querkrümmungswert auf den Soll-Querkrümmungswert geführt.

Dabei kann es vorteilhaft sein, die Temperatur des ersten Metallbandes und/ oder des zweiten Metallbandes messtechnisch zu erfassen, z. B. mit entsprechenden Messeinrichtungen. Dabei kann es sich z. B. um berührungslos arbeitende Messeinrichtungen, z. B. Pyrometer, oder auch um berührend arbeitende Messeinrichtungen, z. B. Kontaktthermometer handeln.

Auch wenn es im Rahmen der Erfindung in erster Linie darum geht, die Querkrümmung auf einen vorgegebenen Sollwert zu regeln, wobei die Temperierung als Stellgröße verwendet wird, ist die Erfassung und folglich Messung der Temperaturen zweckmäßig. Zum einen kann es sinnvoll sein, beim Anlauf des Prozesses bestimmte Ziel-Temperaturen vorzugeben und zum anderen dient die Temperaturmessung auch Kontrollzwecken. So lässt sich über die Temperaturerfassung auch gewährleisten, dass nicht nur die vorgegebene Querkrümmung (z. B. Null) erzielt wird, sondern dass die Bandtemperaturen in einem Temperaturbereich liegen, der eine einwandfreie Verarbeitung des Kunststoffs und eine einwandfreie Haftung der beiden Deckbänder an der Kernschicht gewährleistet.

Wie bereits beschrieben ist es zweckmäßig, die Ist-Querkrümmung nach dem Zusammenführen der Metallbänder unter Zwischenschaltung der Kunststoffbahn zu messen. Dabei besteht die Möglichkeit, die Ist-Querkrümmung in einem vorgegebenen Abstand hinter der Zusammenführvorrichtung, z. B. hinter dem Kalander zu messen. Bevorzugt wird der Verbund nach dem Zusammenführen und Verbinden in dem Kalander dann in einer Heiz- und Presseinrichtung fertiggestellt. Eine solche Heiz- und Presseinrichtung kann zumindest eine Heizvorrichtung (z. B. einen Bandschwebeofen) und eine Presseinrichtung, z. B. einen weiteren Kalander, aufweisen. Auch in einer solchen Heiz- und Presseinrichtung bzw. in einem dabei vorgesehenen Nachheizofen kann ein weiterer Temperaturausgleich zwischen eventuellen Temperaturunterschieden der Metallbänder erfolgen. Dennoch kann es zweckmäßig sein, die Ist-Querkrümmung vor der Heiz- und Presseinrichtung und folglich vor dem Nachheizofen zu messen. Es liegt folglich im Rahmen der Erfindung, dass die Ist-Querkrümmung nach dem Zusammenführen und Verbinden und vor dem Durchlaufen der nachgeordneten Heiz- und Presseinrichtung gemessen wird. Dieses hat den Vorteil, dass die Ist-Querkrümmung verhältnismäßig dicht hinter der Zusammenführung gemessen wird, so dass die regelungstechnische Totzeit bzw. Totlänge minimiert wird. Optional liegt es jedoch auch im Rahmen der Erfindung, die Ist-Querkrümmung hinter dem Nachheizofen bzw. in der Heiz- und Pressstrecke oder nach der Heiz- und Pressstrecke zu messen und diesen Messwert auf die Soll-Querkrümmung zu regeln. Außerdem besteht die Möglichkeit, die Ist-Querkrümmung sowohl zwischen der Zusammenführung und dem Nachheizofen als auch hinter dem Nachheizofen bzw. hinter der Heiz- und Pressstrecke zu messen, so dass dann eine überlagerte Regelung realisiert werden kann.

Die bei einer Abweichung der Ist-Querkrümmung von der Soll-Querkrümmung einzustellenden Werte für die Stellgröße können mit einem Rechenmodell bestimmt werden, welches zumindest die Banddicke, die Bandbreite, den Wärmeausdehnungskoeffizient der Metallbänder und/oder dem Temperaturunterschied zwischen den Metallbändern beinhaltet.

Grundsätzlich besteht die Möglichkeit, zur Querkrümmungskorrektur die Temperaturen beider Deckbänder zu variieren. Es ist jedoch ausreichend, lediglich die Temperierung eines der Bänder als Stellgröße für den Regelprozess zu verwenden. So kann z. B. eines der Deckbänder die (fest) durch den Betrieb der Vorheizeinrichtung vorgegebene Temperatur aufweisen und zur Vermeidung von Querkrümmungen wird dann lediglich die Temperatur des anderen Metallbandes entsprechend "angepasst", so dass durch entsprechende Variation der Temperatur dieses anderen Metallbandes die Querkrümmung auf den gewünschten Wert, z. B. auf Null, geregelt wird.

Gegenstand der Erfindung ist auch eine Anlage zum Herstellen von Verbundbändern oder -blechen der beschriebenen Art. Eine solche Anlage weist zumindest eine Vorheizeinrichtung für das erste Metallband und eine zweite Vorheizeinrichtung für das zweite Metallband und zumindest eine Zusammenführvorrichtung auf, in der die Metallbänder unter Zwischenschaltung einer Kunststoffbahn zusammenführbar sind. Die Zusammenführvorrichtung kann z. B. als Walzenvorrichtung, z. B. als Kalander mit zumindest zwei (temperierbaren) Walzen ausgebildet sein. Die erfindungsgemäße Anlage ist gekennzeichnet durch zumindest eine der Zusammenführvorrichtung nachgeordnete Querkrümmungsmesseinrichtung, mit der eine Ist-Querkrümmung des Verbundbandes messbar ist. Außerdem ist eine Steuer- und/oder Regeleinrichtung vorgesehen, mit welcher die Temperierung des ersten Metallbandes und/oder des zweiten Metallbandes vor dem Zusammenführen und/oder während des Zusammenführens in Abhängigkeit von der Ist-Querkrümmung einstellbar ist.

Die Querkrümmungsmesseinrichtungen sind dabei bevorzugt als berührungslos arbeitende Messeinrichtungen ausgebildet. Insoweit kann auf die aus dem Stand der Technik bekannten Einrichtungen zum Bestimmen von Querkrümmungen (z. B. aus dem Bereich der Metallbandbehandlung) zurückgegriffen werden. So können z. B. optisch arbeitende Messeinrichtungen, z. B. Lasermesseinrichtungen verwendet werden, die eine Laserabstandsmessung durchführen. Dazu sind z. B. Laserabstandsmessvorrichtungen bekannt, bei denen über die Bandbreite verteilt eine Vielzahl von Lasern stationär angeordnet sind. Alternativ können Laserabstandsmessvorrichtungen mit einem oder mehreren Lasern verwendet werden, der oder die über die Bandbreite traversierend angeordnet ist/sind, z. B. auf einem Schlitten. Schließlich können auch Lasermessvorrichtungen zum Einsatz kommen, bei denen zumindest ein Laserstrahl mit geeigneten optischen Elementen quer zur Bandlaufrichtung über das Band geführt wird.

Bevorzugt weist die Anlage vor und/oder in der Zusammenführvorrichtung eine erste Temperaturmesseinrichtung für das erste Metallband und eine zweite Temperaturmesseinrichtung für das zweite Metallband auf.

Es liegt im Rahmen der Erfindung, die Kunststoffbahn unmittelbar im Zuge des Zusammenführens der Metallbänder zuzuführen, so dass die Kunststoffbahn gegebenenfalls in den zusammenlaufenden Spalt zwischen den beiden Metallbändern eingeführt wird. Die Metallbänder und die zwischengeschaltete Kunststoffbahn werden folglich bei dieser ersten Ausführungsform gleichzeitig zusammengeführt und die Zusammenführung erfolgt bevorzugt in einer Zusammenführvorrichtung, die als Laminiereinheit, z. B. mit einer Walzeneinrichtung ausgebildet ist, die zumindest zwei einen Walzenspalt bildende (beheizte) Walzen aufweist.

In einer modifizierten zweiten Ausführungsform kann das Zusammenführen der Metallbänder und der Kunststoffbahn jedoch auch in zumindest zwei Stufen erfolgen. Dazu weist die Zusammenführvorrichtung bevorzugt eine erste Laminiereinheit auf, mit der die Kunststoffbahn mit dem ersten Metallband (z. B. dem unteren Metallband) zusammengeführt und eine zweite Laminiereinheit, mit der das zweite Metallband (z. B. das obere Metallband) mit der auf bzw. an dem ersten Metallband angeordneten Kunststoffbahn zusammengeführt wird. Es liegt folglich im Rahmen der Erfindung, das erste Metallband (z. B. das untere Metallband) zuzuführen und die Kunststoffbahn mit dem ersten Metallband zusammenzuführen, so dass die Kunststoffbahn z. B. auf das erste Metallband aufkaschiert wird. Anschließend wird dann das zweite Metallband zugeführt, so dass in der zweiten Laminiereinheit ein zweiter Laminier- bzw. Kaschierprozess erfolgt. Die Querkrümmungsmessung erfolgt bei dieser zweiten Ausführungsform hinter der zweiten Laminiereinheit.

Die unter Zwischenschaltung der Kunststoffbahn zusammengeführten Metallbänder und folglich der hergestellte Verbund wird bevorzugt in einer Heiz- und/ oder Presseinrichtung fertiggestellt. Dazu kann die Heiz- und Pressvorrichtung z. B. einerseits eine Heizeinrichtung, z. B. einen weiteren Durchlaufofen bzw. Nachheizofen und andererseits eine der Heizeinrichtung nachgeordnete, separate Presseinrichtung aufweisen, die z. B. von einer Walzenanordnung bzw. einem Kalander gebildet wird. An diese Presseinrichtung kann sich dann optional eine weitere Heizeinrichtung und/oder eine Kühleinrichtung anschließen. Dabei kann eine Querkrümmungsmesseinrichtung zwischen der Zusammenführvorrichtung und der Heiz- und Pressvorrichtung angeordnet sein. Alternativ oder ergänzend kann eine Querkrümmungsmessvorrichtung im Bereich der Heiz- und Pressvorrichtung (z. B. hinter dem Nachheizofen) oder hinter der Heiz- und Pressvorrichtung angeordnet sein.

Die metallischen Deckbleche weisen bevorzugt eine Dicke von 0,1 mm bis 1 mm, vorzugsweise 0,2 mm bis 0,6 mm auf.

Die Zwischenschicht aus Kunststoff weist z. B. eine Dicke von 0,05 mm bis 3 mm, z. B. 0,3 mm bis 2 mm auf. Dicke der Zwischenschicht meint dabei die Dicke der Zwischenschicht im fertigen Produkt und folglich innerhalb des Verbundbleches.

Die Kunststoffbahn ist bevorzugt als Kunststofffolie ausgebildet. Die Kunststoffbahn kann z. B. aus thermoplastischem Kunststoff bestehen, z. B. aus Polyethylen, Polypropylen und/oder Polyamid. Kunststoff bzw. Kunststoffbahn meint dabei im Rahmen der Erfindung auch Kunststoffbahnen bzw. Kunststoffe, in welche weitere Partikel oder dergleichen, z. B. Fasern integriert sind und folglich insbesondere faserverstärkte Kunststoffe oder Kunststoffbahnen. Es werden folglich auch Bahnen erfasst, die Kunststoff als eine Komponente aufweisen oder auf Basis von Kunststoff hergestellt sind. Im Übrigen können zwischen den Deckschichten auch mehrere Kunststoffbahnen, z. B. zwei Kunststoffbahnen angeordnet sein.

Es werden bevorzugt thermoplastische Kunststoffe mit verhältnismäßig hohen Schmelzpunkten verwendet, um im Zuge der Anwendung und Weiterverarbeitung dann auch Verarbeitungsprozesse der Verbundbänder oder -bleche bei höheren Temperaturen, z. B. im Rahmen einer Lackierung, zu ermöglichen.

So lassen sich z. B. für die Kernschicht Kunststoffbahnen aus einem Polyethylen-Polyamid-Compound-Kern mit einer Schmelztemperatur von mehr als 200 °C, z. B. 200 °C bis 250 °C, bevorzugt etwa 220 °C verwenden.

Im Folgenden wird die Erfindung anhand einer lediglich ein Ausführungsbeispiel darstellenden Zeichnung näher erläutert. Es zeigen:
- Fig. 1: ein Verbundband bzw. -blech in einem vereinfachten Querschnitt,
- Fig. 2: eine Anlage zum Herstellen eines Verbundbandes in einer stark vereinfachten, schematischen Darstellung,
- Fig. 3: eine abgewandelte Ausführungsform der Anlage nach Fig. 2.

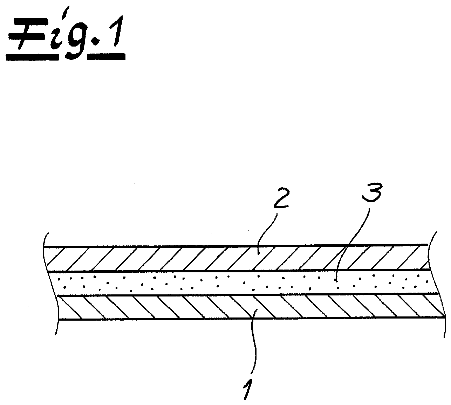

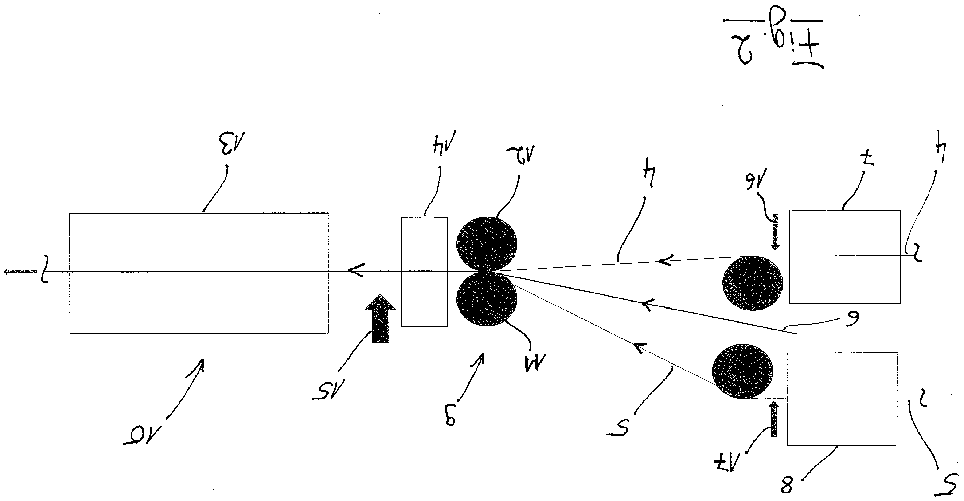

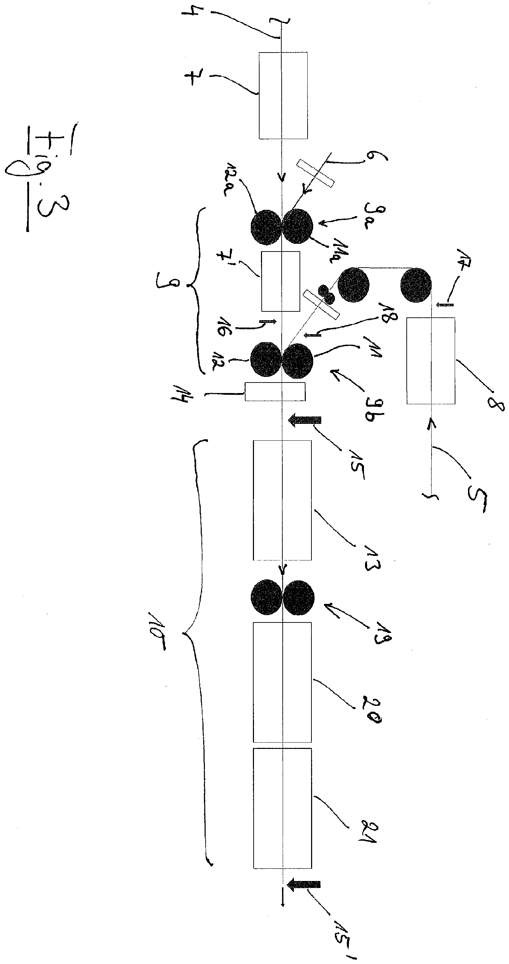

Mit der in den Fig. 2 und 3 dargestellten Anlage lassen sich Verbundbänder bzw. -bleche herstellen, die aus zumindest einer unteren Deckschicht 1 aus Metall, einer oberen Deckschicht 2 aus Metall und zumindest einer zwischen den Deckschichten 1, 2 angeordneten Kernschicht 3 aus Kunststoff bestehen, wobei die Deckschichten 1, 2 stoffschlüssig mit der Kernschicht 3 aus Kunststoff verbunden sind (vgl. Fig. 1).

Zum Herstellen solcher Verbundbänder nach Fig. 1 werden in der Anlage nach Fig. 2 und 3 folglich ein erstes Metallband 4 für die untere Deckschicht und ein oberes Metallband 5 für die obere Deckschicht und eine Kunststoffbahn 6 für die Kernschicht zur Verfügung gestellt. Das erste Metallband 4 und das zweite Metallband 5 und die Kunststoffbahn 6 werden kontinuierlich zusammengeführt und unter Anwendung von Druck und/oder Wärme kontinuierlich miteinander stoffschlüssig verbunden. Für den erfindungsgemäßen Prozess zum Herstellen von Verbundbändern werden folglich Metallbänder 4, 5 als Ausgangsprodukt zur Verfügung gestellt. Dabei handelt es sich z. B. um Metallbänder aus Stahl, z. B. elektrolytisch verzinkte und gegebenenfalls geölte Stahlbänder. Alternativ können aber auch Bänder aus Aluminium oder anderen Metallen zum Einsatz kommen. Bevorzugt werden solche Metallbänder 4, 5 zunächst vorbehandelt, indem sie kontinuierlich einseitig mit einem Haftvermittler beschichtet werden. Derartige Maßnahmen sind in den Figuren nicht dargestellt.

Die in den Fig. 2 und 3 dargestellte Anlage weist in der Regel zumindest einen nicht dargestellten Abwickler für das erste Metallband 4 und einen ebenfalls nicht dargestellten Abwickler für das zweite Metallband 5 und darüber hinaus eine ebenfalls nicht dargestellte Abwickelvorrichtung für die Kunststoffbahn 6 auf. Außerdem kann ein Aufwickler für die fertige Verbundbahn vorgesehen sein. Dieser ist ebenfalls nicht dargestellt.

Ferner weist die Anlage eine erste Vorheizeinrichtung 7 für das erste Metallband 4 und eine zweite Vorheizeinrichtung 8 für das zweite Metallband 5 sowie eine Zusammenführvorrichtung 9 auf, in der die Metallbänder 4, 5 unter Zwischenschaltung der Kunststoffbahn 6 zusammengeführt und miteinander verbunden werden. Der Zusammenführvorrichtung 9 ist eine Heiz- und Pressvorrichtung 10 nachgeordnet, in der der Verbund zwischen den Deckblechen 4, 5 und der zwischengeschalteten Kunststoffbahn fertiggestellt wird.

Die Vorheizeinrichtung 7 und die Vorheizeinrichtung 8 sind im Ausführungsbeispiel jeweils als Ofen, z. B. Bandschwebeofen, ausgebildet. In diesen Öfen werden die Metallbänder 4, 5 auf eine bestimmte Temperatur vorgeheizt.

Die Zusammenführvorrichtung 9 ist im Ausführungsbeispiel nach Fig. 1 als Walzenvorrichtung bzw. Kalander mit einer oberen Walze 11 und einer unteren Walze 12 ausgebildet, wobei diese Walzen 11, 12 beheizt sein können. Als Heiz- und Pressvorrichtung 10 ist in der Ausführungsform nach Fig. 1 lediglich ein Nachheizofen 13 dargestellt, der ebenfalls als Bandschwebeofen ausgebildet sein kann.

Dabei zeigt die Fig. 2 eine erste Ausführungsform der Erfindung, bei der die beiden Metallbänder 4, 5 und die Kunststoffbahn 6 gleichzeitig zusammengeführt und miteinander verbunden werden, so dass die Kunststoffbahn 6 unmittelbar im Zuge des Zusammenführens der Metallbänder 4, 5 zugeführt wird und die Kunststoffbahn folglich in den zusammenlaufenden Spalt zwischen den beiden Metallbändern eingeführt wird.

Im Übrigen ist angedeutet, dass die Metallbänder 4, 5 in der Anlage beim Anfahren des Prozesses im Bereich eines Bandanfangs mit einer zusätzlichen Bandverbindungsvorrichtung 14 lokal miteinander verbunden werden können. Eine solche Verbindung der beiden Bänder erfolgt im Anfahrprozess, besonders bevorzugt ohne zwischengeschaltete Kunststoffbahn. Die Verbindung kann z. B. durch Stanzen, Nieten, Durchsetzfügen (Clinchen), Schweißen und/oder Kleben erfolgen. Solche Bandverbindungsvorrichtungen sind aus Prozesslinien für die Herstellung von Metallbändern bekannt. Sie werden bei der beschriebenen Anlage optional im Bereich der Zusammenführvorrichtung oder in Bandlaufrichtung hinter der Zusammenführvorrichtung und vor der Heiz- und/oder Pressvorrichtung angeordnet. Durch diese zusätzliche, lokale Bandverbindung im Bereich des Bandanfangs bzw. im Bereich des Bandanfangs eines der Metallbänder wird eine Delamination dieses Bereichs im weiteren Durchlauf durch die Laminierlinie vermieden. Der Anfahrprozess lässt sich insgesamt optimieren und im Übrigen ist gewährleistet, dass beim Durchlaufen durch die Laminierlinie und insbesondere die entsprechenden Heiz- und gegebenenfalls Pressstrecken von Anfang an die beiden Oberflächen der durchlaufenden Anordnung von Metallbändern und nicht von dem Kunststoffband gebildet werden. Erfindungsgemäß ist nun von besonderer Bedeutung, dass der Zusammenführvorrichtung 9 eine Querkrümmungsmesseinrichtung 15 nachgeordnet ist, mit der eine Ist-Querkrümmung des in der Zusammenführvorrichtung hergestellten Verbundbandes gemessen wird. Erfindungsgemäß erfolgt dann die Temperierung des ersten Metallbandes 4 und/oder des zweiten Metallbandes 5 vor dem Zusammenführen und/oder während des Zusammenführens in Abhängigkeit von der gemessenen Ist-Querkrümmung. Erfindungsgemäß werden folglich eventuell entstehende Querkrümmungen im Verbundband nicht anschließend durch geeignete Maßnahmen eliminiert, sondern die Ausbildung von Querkrümmungen wird sogleich durch geeignete Beeinflussung der Temperierung der Metallbänder unterbunden, und zwar bevorzugt durch regelungstechnische Maßnahmen.

Dazu weist die Anlage eine nicht dargestellte Steuer- oder Regeleinrichtung auf, mit welcher die Temperierung des ersten Metallbandes 4 und/oder des zweiten Metallbandes 5 vor dem Zusammenführen und/oder während des Zusammenführens in Abhängigkeit von der Ist-Querkrümmung eingestellt wird.

Bevorzugt wird die Querkrümmung in einem geschlossenen Regelkreis auf eine vorgegebene Soll-Querkrümmung geregelt, wobei als Soll-Querkrümmung bevorzugt der Wert Null vorgegeben wird. Als Stellgröße des Regelkreises wird die Temperierung des ersten Metallbandes und/oder des zweiten Metallbandes vor dem Zusammenführen oder während des Zusammenführens verwendet. Wird folglich im Zuge der Messung eine Abweichung der gemessenen Ist-Querkrümmung von der vorgegebenen Soll-Querkrümmung (z. B. Null) festgestellt, so erzeugt die Regelvorrichtung ein Korrektursignal für die Stellgröße, so dass die Temperierung des ersten Metallbandes und/oder des zweiten Metallbandes entsprechend variiert wird. Mit Hilfe eines geschlossenen Regelkreises lässt sich die Ist-Querkrümmung dann auf die vorgegebene Soll-Querkrümmung führen.

Zur Temperierung bzw. zur Veränderung der Temperierung und damit der Temperatur des jeweiligen Metallbandes im Zuge eines solchen Regelprozesses können z. B. die Betriebsparameter der entsprechenden Vorheizeinrichtung und folglich des betreffenden Ofens 7 und/oder 8 eingestellt werden.

Alternativ können zu einer Temperierung bzw. zur Veränderung der Temperierung und damit der Temperatur des jeweiligen Metallbandes die Temperierungen der Walzen 11, 12 der Zusammenführvorrichtung variiert bzw. eingestellt werden.

Stets ist gewährleistet, dass die Temperaturen der Metallbänder so angepasst werden, dass im Zuge des Verbindens ein querkrümmungsfreies Verbundband hergestellt wird.

Dabei müssen die Temperaturen der beiden Metallbänder nicht zwangsläufig identisch sein, denn die Metallbänder durchlaufen nach dem Austritt aus den Öfen 7, 8 unterschiedliche Strecken und auch die Umschlingungen um die Walzen 11, 12 sind nicht identisch. Damit kommt es folglich im Rahmen des erfindungsgemäßen Verfahrens nicht auf die absoluten Temperaturen der Metallbänder und insbesondere nicht auf identische Temperaturen an, sondern die Temperaturen müssen lediglich so aufeinander abgestimmt werden, dass im Ergebnis im Verbund ein querkrümmungsfreies Verbundband erzeugt wird. Denn während des Zusammenführens (im Kalander 9) und/oder nach dem Zusammenführen wird die Temperatur im Sandwichband vergleichmäßigt. Sofern das untere Deckband 4 vor dem Laminieren kälter als das obere Deckband 5 ist, würde es sich im Kalander 9 und/oder im Nachheizofen 13 relativ zu dem oberen Band erwärmen und dieses würde zu Längenausdehnungen des unteren Deckbandes 4 in Bandbreitenrichtung relativ zu dem oberen Deckband 5 führen. Die Längenunterschiede zwischen den beiden Deckbändern führen dann zu einer tonnenartigen Querkrümmung, die erfindungsgemäß durch die gezielte Variation der Temperaturen vor oder während des Zusammenführens vermieden wird. Dabei liegt es im Rahmen der Erfindung, dass dem ersten Ofen 7 eine erste Temperaturmesseinrichtung 16 und dem zweiten Ofen 8 eine zweite Temperaturmesseinrichtung 17 nachgeordnet ist. In dem Ausführungsbeispiel nach Fig. 2 ist die Querkrümmungsmesseinrichtung 15 in einem Abstand hinter der Zusammenführvorrichtung 9 und vor der Heiz- und Pressvorrichtung 10 bzw. vor dem Nachheizofen 13 angeordnet. Alternativ liegt es jedoch auch im Rahmen der Erfindung, die Querkrümmungsmesseinrichtung 15 hinter dem Nachheizofen 13 bzw. hinter der Heiz- und Pressvorrichtung 10 anzuordnen.

Fig. 3 zeigt eine abgewandelte Ausführungsform der Erfindung, bei der das Zusammenführen der Metallbänder 4, 5 und der Kunststoffbahn 6 in zwei Stufen erfolgt. Dazu weist die Zusammenführvorrichtung 9 eine erste Laminiereinheit 9a auf, mit der die Kunststoffbahn 6 mit dem ersten Metallband 4 (z. B. dem unteren Metallband) zusammengeführt wird und eine zweite Laminiereinheit 9b, mit der das zweite Metallband 5 (z. B. das obere Metallband) mit der auf bzw. an dem ersten Metallband 4 angeordneten Kunststoffbahn 6 zusammengeführt wird. Die erste Laminiereinheit 9a ist wiederum als Walzeneinrichtung bzw. Kalander mit einer oberen Walze 11a und einer unteren Walze 12a ausgebildet. Die zweite Laminiereinheit 9b ist ebenfalls als Walzenvorrichtung bzw. Kalander mit einer oberen Walze 11 und einer unteren Walze 12 ausgebildet. Die Vorheizeinrichtungen 7, 8 sind ebenfalls vorgesehen. Außerdem ist im Bereich des ersten Metallbandes 4 hinter der ersten Laminiereinheit 9a eine weitere Heizeinrichtung 7' vorgesehen. Hinter der Zusammenführvorrichtung 9 und in dem dargestellten Ausführungsbeispiel hinter der zweiten Laminiereinheit 9b ist die Querkrümmungsmesseinrichtung 15 angeordnet, die in der bereits im Zusammenhang mit Fig. 2 beschriebenen Weise eingesetzt wird. Optional könnte diese Querkrümmungsmessvorrichtung 15 auch hinter dem Nachheizofen 13, z. B. zwischen dem Nachheizofen 13 und dem Kalander 19 angeordnet sein.

Denn die der Zusammenführvorrichtung 9 nachgeschaltete Heiz- und Pressvorrichtung weist bei der Ausführungsform nach Fig. 2 beispielhaft eine Heizeinrichtung 10, z. B. einen Ofen 13, eine Presseinrichtung sowie gegebenenfalls eine weitere Heizeinrichtung, z. B. einen Ofen 13, eine Presseinrichtung 19 sowie gegebenenfalls eine weitere Heizeinrichtung 20 und gegebenenfalls eine nachgeschaltete Kühleinrichtung 21 auf. Optional kann der Heiz- und Pressvorrichtung 10 eine zusätzliche Querkrümmungsmesseinrichtung 15' nachgeordnet sein. Diese zusätzliche Querkrümmungsmesseinrichtung 15' kann lediglich zu Kontrollzwecken eingesetzt werden. Alternativ liegt es jedoch auch im Rahmen der Erfindung, diese zusätzliche Querkrümmungsmesseinrichtung 15' gemeinsam mit der Querkrümmungsmesseinrichtung 15 für eine überlagerte Regelung einzusetzen.

Dem ersten Metallband 4 ist wiederum eine Temperaturmesseinrichtung 16 zugeordnet und dem zweiten Metallband 5 ist ebenfalls eine Temperaturmesseinrichtung 17 zugeordnet. Im Bereich des zweiten Metallbandes 5 kann eine weitere Temperaturmesseinrichtung 18 vorgesehen sein.

Unabhängig von den beschriebenen Unterschieden zwischen den Ausführungsformen nach Fig. 2 und 3 erfolgt auch bei der Ausführungsform nach Fig. 3 eine Regelung der Querkrümmung, indem bei Abweichung der gemessenen Ist-Querkrümmung von der vorgegebenen Soll-Querkrümmung ein Korrektursignal für die Stellgröße erzeugt wird, wobei als Stellgröße wiederum die Temperierung des ersten Metallbandes und/oder des zweiten Metallbandes vor dem Zusammenführen oder während des Zusammenführens verwendet wird.

Dabei besteht grundsätzlich die Möglichkeit, im Zuge der Regelung sowohl die Temperierung des ersten Metallbandes als auch die Temperierung des zweiten Metallbandes zu beeinflussen. Bevorzugt wird als Stellgröße für die Regelung jedoch lediglich die Temperierung eines der Metallbänder verwendet, z. B. des oberen Metallbandes verwendet.

## Patentansprüche

1. Verfahren zum Herstellen von Verbundbändern oder -blechen, bestehend aus zumindest einer ersten Deckschicht (1) aus Metall, einer zweiten Deckschicht (2) aus Metall und zumindest einer zwischen den Deckschichten (1, 2) angeordneten und mit diesen stoffschlüssig verbundenen Kernschicht (3) aus Kunststoff,
wobei ein erstes Metallband (4) für die erste Deckschicht (1), ein zweites Metallband (5) für die zweite Deckschicht (2) und eine Kunststoffbahn (6) für die Kernschicht (3) zusammengeführt und unter Anwendung von Druck und/oder Wärme zu einem Verbundband kontinuierlich miteinander stoffschlüssig verbunden werden,
wobei das erste Metallband (4) und das zweite Metallband (5) vor dem Zusammenführen und/oder während des Zusammenführens erwärmt werden,
**dadurch gekennzeichnet,**
**dass** nach dem Zusammenführen und Verbinden der Metallbänder (4, 5) eine Ist-Querkrümmung des Verbundbandes gemessen wird, und
**dass** die Temperierung des ersten Metallbandes (4) und/oder des zweiten Metallbandes (5) vor dem Zusammenführen und/oder während des Zusammenführens in Abhängigkeit von der Ist-Querkrümmung erfolgt.

2. Verfahren nach Anspruch 1, **dadurch gekennzeichnet, dass** die Querkrümmung in einem geschlossenen Regelkreis auf eine vorgegebene Soll-Querkrümmung geregelt wird.

3. Verfahren nach Anspruch 2, **dadurch gekennzeichnet, dass** als Soll-Querkrümmung der Wert Null vorgegeben wird.

4. Verfahren nach Anspruch 2 oder 3, **dadurch gekennzeichnet, dass** als Stellgröße des Regelkreises die Temperierung des ersten Metallbandes (4) und/ oder des zweiten Metallbandes (5) vor dem Zusammenführen oder während des Zusammenführens verwendet wird.

5. Verfahren nach einem der Ansprüche 1 bis 4, **dadurch gekennzeichnet, dass** zur Temperierung des jeweiligen Metallbandes vor dem Zusammenführen ein oder mehrere Betriebsparameter der jeweiligen Vorheizeinrichtung eingestellt werden.

6. Verfahren nach einem der Ansprüche 1 bis 5, **dadurch gekennzeichnet, dass** als Vorheizeinrichtung zumindest ein Ofen, vorzugsweise ein Bandschwebeofen verwendet wird.

7. Verfahren nach einem der Ansprüche 1 bis 6, **dadurch gekennzeichnet, dass** die Metallbänder unter Zwischenschaltung der Kunststoffbahn zwischen Walzen einer Walzeneinrichtung, z. B. eines Kalanders, zusammengeführt werden.

8. Verfahren nach Anspruch 7, **dadurch gekennzeichnet, dass** zur Temperierung der Metallbänder die Temperierung der Walzen variiert wird/werden.

9. Verfahren nach einem der Ansprüche 1 bis 8, **dadurch gekennzeichnet, dass** die Temperatur des ersten Metallbandes (4) und/oder des zweiten Metallbandes (5) mit zumindest einer Messeinrichtung (16, 17, 18) gemessen wird.

10. Verfahren nach einem der Ansprüche 1 bis 9, **dadurch gekennzeichnet, dass** das Verbundband nach dem Zusammenführen eine Heiz- und Presseinrichtung (10) durchläuft und dass eine oder mehrere Querkrümmungsmessungen zwischen dem Zusammenführen und der Heiz- und Presseinrichtung (10) und/oder nach der Heiz- und Presseinrichtung (10) erfolgen.

11. Verfahren nach einem der Ansprüche 1 bis 10, **dadurch gekennzeichnet, dass** die bei einer Abweichung der Ist-Querkrümmung von der Soll-Querkrümmung einzustellenden Werte für die Stellgröße mit einem Rechenmodell gebildet werden, welches zumindest die Banddicke, Bandbreite, den Wärmeausdehnungskoeffizient und/oder den Temperaturunterschied zwischen den Metallbändern beinhaltet.

12. Anlage zum Herstellen von Verbundbändern oder -blechen, welche aus zumindest einer unteren Deckschicht (1) aus Metall, einer oberen Deckschicht (2) aus Metall und einer zwischen den Deckschichten (1, 2) angeordneten und mit diesen stoffschlüssig verbundenen Kernschicht (3) aus Kunststoff bestehen, nach einem Verfahren nach einem der Ansprüche 1 bis 11,
mit zumindest einer ersten Vorheizeinrichtung (7) für das erste Metallband (4) und einer zweiten Vorheizeinrichtung (8) für das zweite Metallband (5),
mit einer Zusammenführvorrichtung (9), in der die Metallbänder (4, 5) unter Zwischenschaltung einer Kunststoffbahn (6) zusammenführbar sind
**gekennzeichnet durch** zumindest eine der Zusammenführvorrichtung (9) nachgeordnete Querkrümmungsmesseinrichtung (15), mit der eine Ist-Querkrümmung des Verbundbandes messbar ist und
eine Steuer- und/oder Regeleinrichtung, mit welcher die Temperierung des ersten Metallbandes (4) und/oder des zweiten Metallbandes (5) vor dem Zusammenführen und/oder während des Zusammenführens in Abhängigkeit von der Ist-Querkrümmung einstellbar ist.

13. Anlage nach Anspruch 12, **dadurch gekennzeichnet, dass** die Querkrümmungsmesseinrichtungen (15, 15') als berührend oder berührungslos arbeitende Messeinrichtungen ausgebildet sind.

14. Anlage nach Anspruch 12 oder 13, **dadurch gekennzeichnet, dass** vor und/ oder in der Zusammenführvorrichtung (9) eine erste Temperaturmesseinrichtung (16) für das erste Metallband (4) und/oder eine zweite Temperaturmesseinrichtung (17) für das zweite Metallband (5) angeordnet ist/sind.

## Claims

1. A method for manufacturing composite strips or sheets, comprised of at least one first cover layer (1) made of metal, a second cover layer (2) made of metal and at least one core layer (3) made of plastic that is arranged between the cover layers (1, 2) and integrally bonded thereto,
wherein a first metal strip (4) for the first cover layer (1), a second metal strip (5) for the second cover layer (2) and a plastic web (6) for the core layer (3) are combined and continuously integrally bonded with each other through the application of pressure and/or heat to yield a composite strip,
wherein the first metal strip (4) and the second metal strip (5) are heated prior to the combination and/or during the combination.
**characterized in that**, after the metal strips (4, 5) have been combined and joined together, an actual transverse curvature of the composite strip is measured, and
the tempering of the first metal strip (4) and/or second metal strip (5) takes place as a function of the actual transverse curvature prior to the combination and/or during the combination.

2. The method according to claim 1, **characterized in that** the transverse curvature is regulated in a closed control loop to a prescribed desired transverse curvature.

3. The method according to claim 2, **characterized in that** the value zero is prescribed as the desired transverse curvature.

4. The method according to claim 2 or 3, **characterized in that** the tempering of the first metal strip (4) and/or second metal strip (5) prior to the combination or during the combination is used as the manipulated variable for the control loop.

5. The method according to one of claims 1 to 4, **characterized in that** one or several operating parameters is/are set for the respective preheating device for purposes of tempering the respective metal strip prior to the combination.

6. The method according to one of claims 1 to 5, **characterized in that** at least one furnace, preferably a strip flotation furnace, is used as the preheating device.

7. The method according to one of claims 1 to 6, **characterized in that** the metal strips are combined with the plastic web interspersed between the rolls of a roller device, e.g., a calendar.

8. The method according to claim 7, **characterized in that** the tempering of the rolls is varied for tempering the metal strips.

9. The method according to one of claims 1 to 8, **characterized in that** the temperature of the first metal strip (4) and/or second metal strip (5) is measured with at least one measuring device (16, 17, 18).

10. The method according to one of claims 1 to 9, **characterized in that** the composite strip runs through a heating and pressing device (10) after the combination, and that one or several transverse curvature measurements take(s) place between the combination and the heating and pressing device (10) and/or after the heating and pressing device (10).

11. The method according to one of claims 1 to 10, **characterized in that** the values for the manipulated variable to be set given a deviation of the actual transverse curvature from the desired transverse curvature are determined with a computational model, which incorporates at least the strip thickness, the strip width, the thermal expansion coefficient and/or the temperature difference between the metal strips.

12. A system for manufacturing composite strips or sheets, comprised of at least one lower cover layer (1) made of metal, a second upper layer (2) made of metal and at least one core layer (3) made of plastic that is arranged between the cover layers (1, 2) and integrally bonded thereto, according to one of claims 1 to 11, with at least one first preheating device (7) for the first metal strip (4) and a second preheating device (8) for the second metal strip (5),
with a combination device (9), in which the metal strips can be combined (4, 5) with a plastic web (6) interspersed,
**characterized by** at least one transverse curvature measuring device (15) arranged downstream from the combination device (9), which can be used to measure an actual transverse curvature of the composite strip, and a control and/or regulating device, which can be used to set the tempering of the first metal strip (4) and/or second metal strip (5) prior to the combination and/or during the combination as a function of the actual transverse curvature.

13. The system according to claim 12, **characterized in that** the transverse curvature measuring devices (15, 15') are designed as measuring devices that are operated with or without touch.

14. The system according to claim 12 or 13, **characterized in that** a first temperature measuring device (16) for the first metal strip (4) and/or a second temperature measuring device (17) for the second metal strip (5) is/are arranged before and/or in the combination device (9) .

## Revendications

1. Procédé pour la fabrication de bandes ou tôles composites se composant au moins d'une première couche de recouvrement (1) en métal, d'une deuxième couche de recouvrement (2) en métal et au moins d'une couche centrale (3) en plastique disposée entre les couches de recouvrement (1, 2) et reliée par liaison de matières à celles-ci,
dans lequel une première bande métallique (4) pour la première couche de recouvrement (1), une deuxième bande métallique (5) pour la deuxième couche de recouvrement (2) et une bande de plastique (6) pour la couche centrale (3) sont réunies et reliées en continu les unes aux autres par liaison de matière sous l'application d'une pression et/ou de chaleur pour donner une bande composite,
dans lequel la première bande métallique (4) et la deuxième bande métallique (5) sont chauffées avant la réunion et/ou pendant la réunion,
**caractérisé en ce**
**qu'**après la réunion et liaison des bandes métalliques (4, 5), on mesure une courbure transversale réelle de la bande composite, et
**que** la températion de la première bande métallique (4) et/ou la deuxième bande métallique (5) s'effectue avant la réunion et/ou pendant la réunion en fonction de la courbure transversale réelle.

2. Procédé selon la revendication 1, **caractérisé en ce que** la courbure transversale est réglée à une courbure transversale de consigne prescrite dans un circuit de réglage fermé.

3. Procédé selon la revendication 2, **caractérisé en ce qu'**en guise de courbure transversale de consigne, la valeur zéro est prescrite.

4. Procédé selon la revendication 2 ou 3, **caractérisé en ce qu'**en guise de grandeur de réglage du circuit de réglage, on utilise la températion de la première bande métallique (4) et/ou de la deuxième bande métallique (5) avant la réunion ou pendant la réunion.

5. Procédé selon l'une des revendications 1 à 4, **caractérisé en ce que**, pour la températion de la bande métallique respective, avant la réunion, un ou plusieurs paramètres de fonctionnement du dispositif de préchauffage respectif sont réglés.

6. Procédé selon l'une des revendications 1 à 5, **caractérisé en ce qu'**en guise de dispositif de préchauffage, on utilise au moins un four, de préférence un four à sustentation de bande.

7. Procédé selon l'une des revendications 1 à 6, **caractérisé en ce que** les bandes métalliques sont réunies, avec interposition de la bande de plastique, entre des cylindres d'un dispositif à cylindres, par exemple un calandre.

8. Procédé selon la revendication 7, **caractérisé en ce que**, pour la températion des bandes métalliques, on fait varier la températion des cylindres.

9. Procédé selon l'une des revendications 1 à 8, **caractérisé en ce que** la température de la première bande métallique (4) et/ou de la deuxième bande métallique (5) est mesurée avec au moins un dispositif de mesure (16, 17, 18).

10. Procédé selon l'une des revendications 1 à 9, **caractérisé en ce que** la bande composite, après la réunion, passe par un dispositif de chauffage et de pressage (10) et qu'une ou plusieurs mesures de courbures transversales s'en suivent entre la réunion et le dispositif de chauffage et pressage (10) et/ou après le dispositif de chauffage et pressage (10).

11. Procédé selon l'une des revendications 1 à 10, **caractérisé en ce que** les valeurs à régler pour la grandeur de réglage en cas de divergence entre la courbure transversale réelle et la courbure transversale de consigne sont formées avec un modèle de calcul qui comprend au moins l'épaisseur de bande, la largeur de bande, le coefficient de dilatation thermique et/ou la différence de température entre les bandes métalliques.

12. Installation pour la fabrication de bandes ou tôles composites, lesquelles se composent au moins d'une couche de recouvrement inférieure (1) en métal, d'une couche de recouvrement supérieure (2) en métal et au moins d'une couche centrale (3) en plastique disposée entre les couches de recouvrement (1, 2) et reliée par liaison de matières à celles-ci, selon un procédé selon l'une des revendications 1 à 11,
avec au moins un premier dispositif de préchauffage (7) pour la première bande métallique (4) et un deuxième dispositif de préchauffage (8) pour la deuxième bande métallique (5),
avec un dispositif de réunion (9) dans lequel les bandes métalliques (4, 5) peuvent être réunies avec interposition d'une bande de plastique (6), **caractérisée par** au moins un dispositif de mesure de courbure transversale (15), disposé après le dispositif de réunion (9), avec lequel il est possible de mesurer une courbure transversale réelle de la bande composite, et
un dispositif de commande et/ou régulation avec lequel il est possible de régler la températion de la première bande métallique (4) et/ou de la deuxième bande métallique (5) avant la réunion et/ou pendant la réunion en fonction de la courbure transversale réelle.

13. Installation selon la revendication 12, **caractérisée en ce que** les dispositifs de mesure de courbure transversale (15, 15') sont réalisés en tant que dispositifs de mesure travaillant par contact ou sans contact.

14. Installation selon la revendication 12 ou 13, **caractérisée en ce que**, devant et/ou dans le dispositif de réunion (9), un premier dispositif de mesure de température (16) pour la première bande métallique (4) et/ou un deuxième dispositif de mesure de température (17) pour la deuxième bande métallique (5) est/sont disposé(s).
